# EUROPEAN PATENT APPLICATION

(11) **EP 4 507 066 A1**
(43) Date of publication of application: **12.02.2025**
(21) Application number: 23905800.1
(22) Date of filing: 14.12.2023
(51) Int. Cl.: H01M 10/48, H01M 10/42, H01M 50/569

(54) **BATTERY SAFETY VALVE AND TEMPERATURE MEASUREMENT CIRCUIT**

(30) Priority: 19.12.2022 CN 202211633928
(71) Applicant: Hangzhou Gold Electronic Equipment Co., Ltd., Hangzhou, Zhejiang 311122 (CN)
(72) Inventor: XIA, Chenqiang, Hangzhou, Zhejiang 311122 (CN); XU, Jianhong, Hangzhou, Zhejiang 311122 (CN); ZHENG, Yi, Hangzhou, Zhejiang 311122 (CN); WANG, Hao, Hangzhou, Zhejiang 311122 (CN); FU, Jianjun, Hangzhou, Zhejiang 311122 (CN)
(74) Representative: JD&P Patent Attorneys Joanna Dargiewicz & Partners
(86) International application number: PCT/CN2023/138814
(87) International publication number: WO 2024/131635

(57) **Abstract**

A battery safety valve and temperature detection circuit, includes a battery, a temperature sensor, and a reference resistor that are connected in series to form a loop, and a safety valve sensor arranged outside a battery safety valve. The temperature sensor is arranged on the battery, voltage acquisition wires are connected to a positive electrode and a negative electrode of the battery respectively, a partial voltage acquisition wire is connected to a wire connected between the temperature sensor and a reference resistor, the voltage acquisition wires and the partial voltage acquisition wire are connected to corresponding voltage acquisition ports of an acquisition chip respectively. The safety valve sensor is connected in parallel to the reference resistor; and when the safety valve is open, a liquid in the battery is in contact with a bottom of the safety valve sensor, and the safety valve sensor is short-circuited.

## Description

### TECHNICAL FIELD

The present disclosure relates to the technical field of battery management, and in particular, to a battery safety valve and temperature detection circuit.

### BACKGROUND

With the rapid development of the new energy industry, lithium-ion batteries, sodium-ion batteries, lead-acid storage batteries, and other electrochemical batteries are widely used. For electric vehicles, energy storage power stations, and other environments, it is necessary to use a large number of batteries connected in parallel and/or series to form high-voltage battery packs. Due to a design process and abuse of batteries and other reasons, and the huge number of batteries, the safety problems of batteries are increasingly prominent. During use of a battery, improper operation or some other reasons lead to safety problems. For example, in the case of severe overcharge, an internal temperature and pressure of the battery continuously increase. When a safety threshold of the battery is exceeded, the battery may explode. Other problems such as battery short circuit, severe overheating, thermal runaway, impact or extrusion deformation and puncture may also cause battery explosion.

A battery safety valve is the last explosion-proof barrier of the battery itself. When the internal pressure of the battery reaches a valve opening threshold of the safety valve (for example, valve opening thresholds of some lithium-ion battery safety valves are 600-800 KPa), in order to prevent explosion, the battery safety valve is opened for gas relief and pressure reduction. At this time, a gas inside the battery is discharged in large quantities, and an electrolyte inside the battery is also ejected with the release of pressure. Although the safety valve is opened to prevent explosion, chemical substances inside the battery that are leaked with the gas may also catch fire after chemical reaction with oxygen in the air at a high temperature. In addition, the battery with problems also affects safety of surrounding batteries, and it is necessary to give an alarm in time for intervention and perform subsequent replacement, and the like, otherwise the overall safe operation of a system is seriously affected.

In the prior art, in order to ensure the safe and effective operation of the battery, a state of the battery is detected and managed mainly by a battery management module (BMS). However, the current battery management module is mainly configured to measure a voltage, a temperature, a charging/discharging current and other information of the battery, but does not detect whether the safety valve is opened, and cannot fully reflect an operating state of the battery.

### SUMMARY OF PRESENT INVENTION

In order to solve the above technical problems, an objective of the present disclosure is to provide a battery safety valve and temperature detection circuit, to detect whether the battery safety valve is opened and to detect a temperature of a battery, so as to more comprehensively reflect an operating state of the battery.

To achieve the objective of the present disclosure, the following technical solutions are used:
A safety valve and temperature detection circuit includes a battery, a temperature sensor, and a reference resistor that are connected in series to form a loop, where the temperature sensor is arranged on the battery and is configured to measure a temperature of the battery; voltage acquisition wires are connected to a positive electrode and a negative electrode of the battery respectively, a partial voltage acquisition wire is connected to a wire connected between the temperature sensor and a reference resistor, the voltage acquisition wires and the partial voltage acquisition wire are connected to corresponding voltage acquisition ports of an acquisition chip respectively; the safety valve and temperature detection circuit further includes a safety valve sensor arranged outside a battery safety valve, and the safety valve sensor is connected in parallel to the reference resistor; when the safety valve is opened, a liquid in the battery is in contact with a bottom of the safety valve sensor, so that the safety valve sensor is short-circuited, and a voltage acquired by the acquisition chip changes.

Preferably, the safety valve sensor includes a main body, and a first detection wire and a second detection wire that are arranged at a bottom of the main body, the main body is made of an insulating material, the first detection wire and the second detection wire each are made of a conductor material, and the first detection wire and the second detection wire are spaced apart by the main body; and when the safety valve is opened, the liquid in the battery is in contact with bottoms of the first detection wire and the second detection wire, so that the safety valve sensor is short-circuited.

Preferably, the first detection wire and the second detection wire are used as two wiring terminals of the safety valve sensor.

Preferably, the voltage acquisition ports include battery voltage acquisition ports and a partial voltage acquisition port, each voltage acquisition wire is connected to a corresponding battery voltage acquisition port, and the partial voltage acquisition wire is connected to the partial voltage acquisition port.

Preferably, a protective resistor is provided on the acquisition chip, a switch is connected to the protective resistor, and the protective resistor and the switch are connected in series and then are connected to the partial voltage acquisition port and a corresponding battery voltage acquisition port.

Preferably, a plurality of batteries are provided, the plurality of batteries are connected in parallel to each other, and two adjacent batteries share one voltage acquisition wire.

Preferably, the temperature sensor is a negative temperature coefficient (NTC) temperature sensor.

To sum up, the present disclosure has the beneficial effects that a safety valve sensor is provided on the battery, and the safety valve sensor is connected to the to-be-detected battery after being connected in series to a temperature sensor, so that an acquisition chip can detect whether a safety valve is opened while acquiring a voltage and a temperature, thereby reflecting an operating state of the battery more comprehensively.

### BRIEF DESCRIPTION OF THE DRAWINGS

FIG. 1 is a schematic diagram of an acquisition chip of the prior art;
FIG. 2 is a schematic diagram of an acquisition chip according to the present application;
FIG. 3 is a schematic diagram of a safety valve detection circuit; and
FIG. 4 is a schematic diagram of a safety valve detection sensor.

### DETAILED DESCRIPTION OF THE EMBODIMENTS

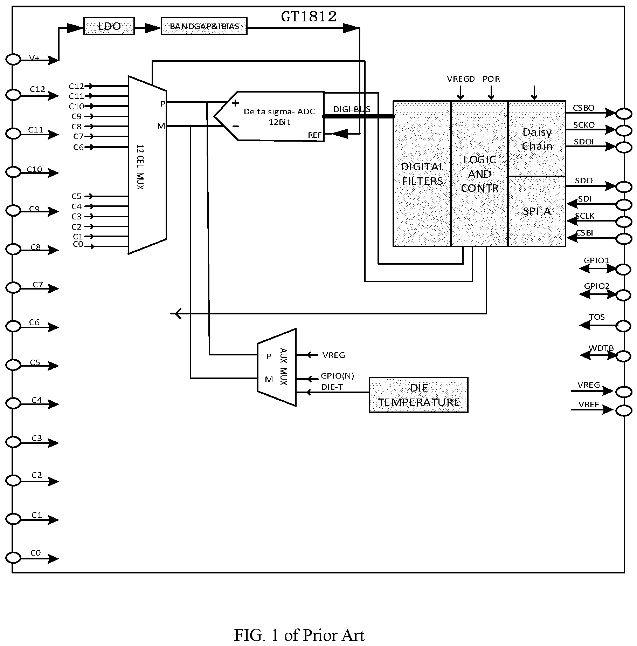

As shown in FIG. 1, in the prior art, an acquisition chip (analog front end (AFE)) of a battery management system implements multi-channel voltage acquisition and two-wire temperature acquisition. Specifically, ports C0 and C1 are connected to a positive electrode and a negative electrode of a first battery respectively, ports C1 and C2 are connected to a positive electrode and a negative electrode of a second battery respectively, and so on. Ports C0-C12 can be used to acquire voltages of 12 batteries, and two-channel temperature acquisition is realized by connecting ports GPIO1 and GPIO2 to NTC temperature sensors provided on the batteries. However, it cannot collect the temperature of each battery. To this end, the inventors have disclosed a multi-channel voltage and temperature collection circuit in Chinese patent application No. CN115265646A. An NTC temperature sensor is mounted on each battery. An end of the NTC temperature sensor is collinear with a negative electrode acquisition wire of the battery, and the other end thereof is connected to a positive electrode of the battery by means of a reference resistor. An acquisition chip collects a battery voltage CC, a partial voltage CT between the NTC temperature sensor and the resistor, and can calculate a resistance value of the NTC temperature sensor, and then a measured temperature value of the NTC temperature sensor can be known. The temperature information is collected while collecting voltage information of each battery.

In order to further add a function of detecting a safety valve of each battery, a safety valve sensor GTS-L is added on the basis of the above acquisition chip, and the safety valve sensor is arranged outside the battery safety valve to detect whether the safety valve is opened.

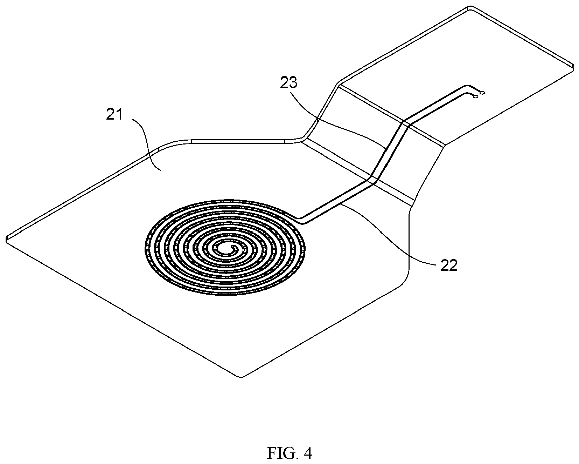

As shown in FIG. 4, the safety valve sensor includes a main body 21, and a first detection wire 22 and a second detection wire 23 that are provided at a bottom of the main body 21. The main body 21 is made of an insulating material, such as a printed circuit board (PCB), and the first detection wire 22 and the second detection wire 23 each are made of a conductor material, such as copper foil. The first detection wire 22 and the second detection wire 23 are spaced apart by the main body 21 and thus are not connected to each other. Moreover, the first detection wire 22 and the second detection wire 23 are used as two wiring terminals of the safety valve sensor.

The principle of the safety valve sensor is as follows: when the battery safety valve is in a closed state, the first detection wire 22 and the second detection wire 23 on the safety valve sensor are not connected to each other, so that resistance between two ends of the safety valve sensor is infinite. When the battery safety valve is opened, a gas inside the battery carries an electrolyte out of the safety valve, and then the electrolyte adheres to the bottom of the main body 21, thus connecting the first detection wire 22 and the second detection wire 23 together. Because the electrolyte is a conductor, the first detection wire 22 and the second detection wire 23 are connected to each other, and the resistance between two ends of the safety valve sensor is close to zero. Whether the safety valve is opened can be known by detecting a potential difference and/or a current change between the two ends of the safety valve sensor.

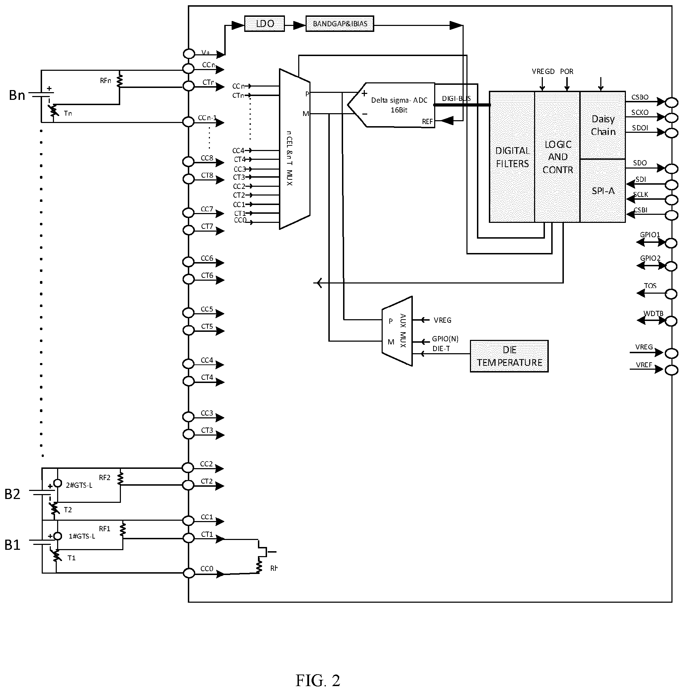

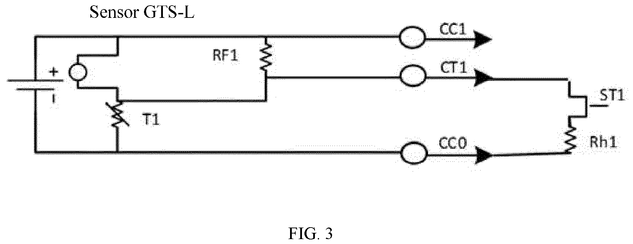

A specific circuit structure is shown in FIGS. 2 and 3. With a first battery B1 as an example, a temperature sensor T1 (thermistor, preferably an NTC temperature sensor) and a reference resistor RF1 are connected in series and then are connected to a positive electrode and a negative electrode of the battery B1, so that the battery B1, the temperature sensor T1 and the reference resistor RF1 form a loop. The positive electrode and the negative electrode of the battery B1 each are further connected with a voltage acquisition wire. An end portion of the voltage acquisition wire is connected to a voltage acquisition port (such as CC0 and CC1, also referred to as a battery voltage acquisition port) of the acquisition chip, and a lower end of the reference resistor RF1 is connected with a partial voltage acquisition wire. An end portion of the partial voltage acquisition wire is connected to a voltage acquisition port (such as CT1, also referred to as a partial voltage acquisition port) of the acquisition chip. In addition, the safety valve sensor GTS-L is connected in parallel to two ends of the reference resistor RF1.

Specifically, as shown in FIG. 3, an upper end of the safety valve sensor GTS-L is connected to the positive electrode of the battery B1, a lower end of the safety valve sensor GTS-L is connected to an upper end of the temperature sensor T1, and a lower end of the temperature sensor T1 is connected to a lower end of the battery B1, so that the battery B1, the temperature sensor T1 and the safety valve sensor GTS-L form a loop.

When the acquisition chip is operating, a voltage of the battery B1 can be known by collecting a potential difference between CC0 and CC1; and resistance of the temperature sensor T1 can be known by collecting a partial voltage between CC0 and CT1 or collecting a partial voltage between CT1 and CC1, so as to know a temperature of the battery B1. When the battery safety valve is opened, resistance values at two ends of the safety valve sensor GTS-L are close to zero, thus short-circuiting the reference resistor RF1, so that the voltage between CC0 and CT1 is equal to or close to the voltage between CC0 and CC1, thereby determining whether the battery safety valve is opened.

As shown in FIG. 3, in order to further eliminate a case that potentials of CT1 and CC1 are equal due to an open circuit of the temperature sensor T1, a protective resistor Rh1 may be provided inside the acquisition chip, and a resistance value of the protective resistor Rh1 is preferably M ohms. A switch ST1 is connected to the protective resistor Rh1, and the protective resistor Rh1 and the connected switch ST1 are connected in series and then are connected to CC0 and CT1. During use, when the potential of CT1 is detected to be close to or equal to CC1, the switch ST1 is closed to continuously detect the potential of CT1. If the potential does not change, it means that the safety valve sensor GTS-L is short-circuited, that is, the battery safety valve is opened. If the potential decreases, it means that the temperature sensor T1 is open-circuited.

As shown in FIG. 2, when a plurality of batteries are connected in series in use, a temperature sensor and a safety valve sensor are provided on each battery and are connected according to the above circuit structure, so that the voltage, the temperature and the safety valve of each battery can be detected. In order to reduce a number of connecting wires, a voltage acquisition wire may be shared between two adjacent batteries.

To sum up, the present disclosure has the beneficial effects that a safety valve sensor is provided outside a battery safety valve, and the safety valve sensor is connected to the to-be-detected battery after being connected in series to a temperature sensor, so that an acquisition chip can detect whether a safety valve is opened while acquiring a voltage and a temperature, thereby reflecting an operating state of the battery more comprehensively.

The above is the description of the embodiments of the present disclosure. The above description of the disclosed embodiments enables those skilled in the art to achieve or use the present disclosure. Multiple modifications to these embodiments are readily apparent to those skilled in the art. The general principles defined herein may be practiced in other embodiments without departing from the spirit or scope of the present disclosure. Therefore, the present disclosure is not limited to these embodiments shown herein, but falls within the widest scope consistent with the principles and novel features disclosed herein.

## Claims

1. A safety valve and temperature detection circuit, comprising a battery, a temperature sensor, and a reference resistor that are connected in series to form a loop, wherein the temperature sensor is arranged on the battery and is configured to measure a temperature of the battery; voltage acquisition wires are connected to a positive electrode and a negative electrode of the battery respectively, a partial voltage acquisition wire is connected to a wire connected between the temperature sensor and a reference resistor, and the voltage acquisition wires and the partial voltage acquisition wire are connected to corresponding voltage acquisition ports of an acquisition chip respectively; the safety valve and temperature detection circuit further comprises a safety valve sensor arranged outside a battery safety valve, and the safety valve sensor is connected in parallel to the reference resistor; and when the safety valve is open, a liquid in the battery is in contact with a bottom of the safety valve sensor, so that the safety valve sensor is short-circuited, and a voltage acquired by the acquisition chip changes.

2. The safety valve and temperature detection circuit according to claim 1, wherein the safety valve sensor comprises a main body, and a first detection wire and a second detection wire that are arranged at a bottom of the main body, the main body is made of an insulating material, the first detection wire and the second detection wire each are made of a conductor material, and the first detection wire and the second detection wire are spaced apart by the main body; and when the safety valve is open, the liquid in the battery is in contact with bottoms of the first detection wire and the second detection wire, so that the safety valve sensor is short-circuited.

3. The safety valve and temperature detection circuit according to claim 2, wherein the first detection wire and the second detection wire are used as two wiring terminals of the safety valve sensor.

4. The safety valve and temperature detection circuit according to claim 1, wherein the voltage acquisition ports comprise battery voltage acquisition ports and a partial voltage acquisition port, each voltage acquisition wire is connected to a corresponding battery voltage acquisition port, and the partial voltage acquisition wire is connected to the partial voltage acquisition port.

5. The safety valve and temperature detection circuit according to claim 4, wherein a protective resistor is provided on the acquisition chip, a switch is connected to the protective resistor, and the protective resistor and the switch are connected in series and then are connected to the partial voltage acquisition port and a corresponding battery voltage acquisition port.

6. The safety valve and temperature detection circuit according to claim 1, wherein a plurality of batteries are provided, the plurality of batteries are connected in parallel to each other, and two adjacent batteries share one voltage acquisition wire.

7. The safety valve and temperature detection circuit according to claim 1, wherein the temperature sensor is a negative temperature coefficient (NTC) temperature sensor.
